# EUROPEAN PATENT APPLICATION

(11) **EP 2 395 540 A1**
(43) Date of publication of application: **14.12.2011**
(21) Application number: 11168577.2
(22) Date of filing: 02.06.2011
(51) Int. Cl.: H01J 61/28, H01J 61/32

(54) **Positioning of auxiliary amalgam in compact fluorescent lamp**

(30) Priority: 08.06.2010 US 795917
(71) Applicant: General Electric Company, Schenectady, NY 12345 (US)
(72) Inventor: Lucz, Peter, 1044 Budapest (HU); Fulop, Jozsef, 1044 Budapest (HU); Kulcsar, Attila, 1044 Budapest (HU); Long, Qi, 201203 Shanghai (CN)
(74) Representative: Bedford, Grant Richard

(57) **Abstract**

A compact fluorescent lamp (100) includes a discharge tube (104) having cathodes (124) disposed adjacent opposite ends. A fill gas is disposed within the discharge tube (104). The lamp further includes an auxiliary amalgam (250) located in the discharge tube (104) and dispersed in the arc to be heated thereby for emitting mercury vapor during at least a starting period.

## Description

The present disclosure relates generally to a low pressure mercury vapor discharge lamp and more particularly to a compact fluorescent lamp including an amalgam for emitting mercury vapor during at least a starting period.

A wide variety of low-pressure discharge lamps are known in the art. These lamps contain small doses of mercury which radiates under the influence of a discharge arc. The mercury may be introduced into a discharge space of the lamp in a number of ways. One possible method is the introduction of an amalgam, typically containing bismuth, e.g., a bismuth-indium-mercury compound. The mercury necessary for the operation of the lamp is released from the amalgam. A cold spot is responsible for the mercury pressure. Other methods of releasing mercury for operation of the lamp include liquid or pellet forms. During operation the mercury "leaves the pellet" with the liquid form working similarly. The liquid and pellet forms are positioned in the arc tube while the amalgam is optimally positioned in the exhaust tube close to the heat of the cathode as its operating temperature is much higher than the liquid or pellet forms. This results in a slow warm-up of the lamp because the amalgam must reach a much higher temperature from room temperature compared to the cold spot for the liquid and pellet forms. The amalgam is positioned in the arc tube in a defined position while the pellet and liquid mercury forms usually move freely in the arc tube.

Discharge lamps employing an amalgam optimized for use in high temperature areas have the disadvantage of a longer start-up period than lamps using pure liquid mercury. The length of the start-up period is dependent on the speed at which mercury vapor pressure in the lamp increases because the lumen output of the lamp is dependent on the mercury vapor pressure. The start-up period is longer for amalgam containing lamps since the mercury pressure is too low at lower temperatures usually present at start-up, typically in the range of 0°C to about 50°C. The mercury vapor increases slowly, not reaching a desired level until the amalgam reaches higher temperatures. In contrast, the mercury vapor pressure of a liquid mercury dosed lamp is much higher than the mercury vapor pressure of the amalgam containing lamp at the lower temperatures or at room temperature.

The amalgam which controls the mercury vapor pressure during lamp operation, except for the start-up period, is typically called the main amalgam. In contrast, the auxiliary amalgam influences the mercury vapor during the start-up period. That is, in order to improve start-up characteristics in an amalgam containing lamp, an auxiliary amalgam is typically attached to each cathode stem. Therefore, the auxiliary amalgam emits mercury during the start-up period. The auxiliary amalgam is heated by the cathode after ignition and emits mercury to make up for the lack of mercury vapor during the start-up period. A typical auxiliary amalgam is indium-mercury (In-Hg).

Amalgams containing low pressure mercury vapor discharge lamps have experienced varying degrees of success. Thus, a need exists for an improved low-pressure mercury vapor discharge lamp.

In an exemplary embodiment of the present invention, a compact fluorescent lamp includes a discharge tube having cathodes disposed adjacent opposite ends. A fill gas is disposed within the discharge tube. The lamp further includes an auxiliary amalgam located in the discharge tube and dispersed in the arc to be heated thereby for emitting mercury vapor during at least a starting period.

In an exemplary embodiment, a low-pressure mercury vapor discharge lamp includes a sealed envelope having an interior surface to form a discharge tube. A fill gas including mercury is disposed within the discharge tube. The lamp further includes a continuous arc path with cathodes disposed at each end of the arc path. An auxiliary amalgam is located in the sealed envelope between the cathodes and dispersed in the arc to be heated thereby for emitting mercury vapor during at least a starting period.

A method of positioning an amalgam in a compact fluorescent lamp includes providing a sealed discharge tube having cathodes disposed at each end thereof. The method further includes disposing a fill gas which includes mercury within the discharge tube. The method further includes locating an auxiliary amalgam in the discharge tube between the cathodes and dispersed in the arc to be heated thereby for emitting mercury vapor during at least a starting period.

A compact fluorescent lamp includes a sealed discharge tube filled with a fill gas including mercury. A phosphor coating is disposed on an inner surface of the tube. The lamp further includes cathodes disposed at each end, forming a continuous arc path therebetween. The lamp further includes an auxiliary amalgam located in the sealed envelope between the cathodes and dispersed in the arc to be heated thereby for emitting mercury during at least a starting period.

In an exemplary embodiment, the auxiliary amalgam is a generally planar wire mesh member.

In another exemplary embodiment, the wire mesh member is a spring-like component.

The improved compact fluorescent lamp with decreased warm-up time is provided.

A primary benefit of various aspects of the present disclosure is a positioning of an auxiliary amalgam in a fluorescent lamp.

Another benefit is an improved compact fluorescent lamp with decreased warm-up time during the service life of the lamp.

Still further advantages will become apparent of those of ordinary skill in the art upon reading and understanding the following detailed description of the preferred embodiments.

Various aspects and embodiments of the present invention will now be described in connection with the accompanying drawings, in which:
FIGURE 1 is a cross-sectional view of a conventional compact fluorescent lamp;
FIGURE 2 is a partially cross-sectional view of a compact fluorescent lamp including an auxiliary amalgam member in accordance with an exemplary embodiment;
FIGURE 3 is an enlarged partially cross-sectional view of another exemplary embodiment of a compact fluorescent lamp including an auxiliary amalgam member;
FIGURE 4 is a partially cross-sectional view of still another exemplary embodiment of a compact fluorescent lamp including an auxiliary amalgam member;
FIGURE 5 is a perspective view of yet another exemplary embodiment of an auxiliary amalgam member; and
FIGURE 6 is a partially cross-sectional view of still further an exemplary embodiment of a fluorescent lamp including an auxiliary amalgam member.

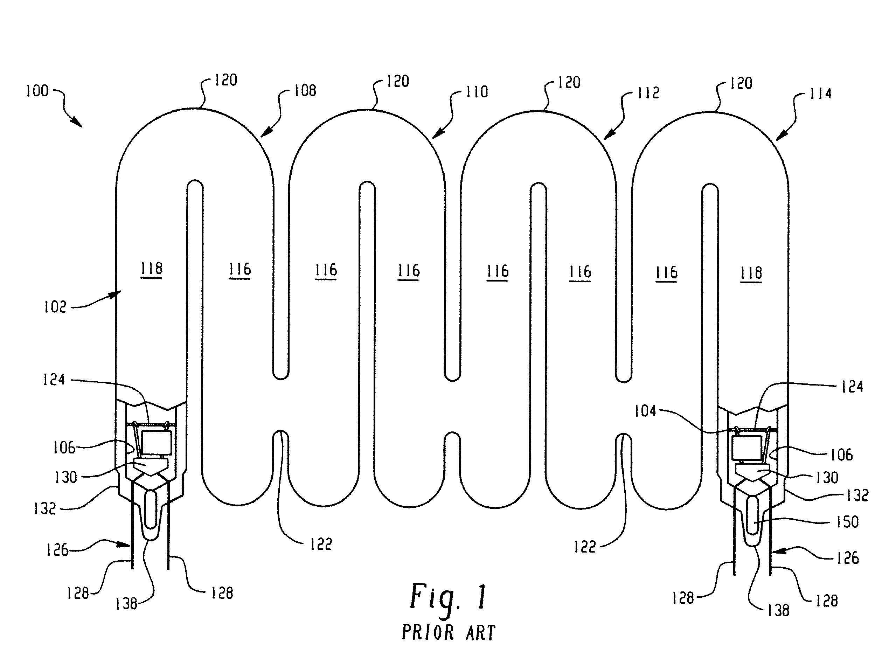

FIGURE 1 illustrates a fluorescent lamp such as a compact fluorescent lamp 100. The lamp 100 includes a sealed discharge tube or a light transmissive envelope 102, preferably formed of a material which is transmissive to radiation in the visible range and may also be transmissive to radiation in the IR range. Suitable materials for forming the envelope 102 include transparent materials such as quartz glass, and other vitreous materials, although translucent materials, such as ceramic materials, are also contemplated. The discharge tube 102 encloses a sealed volume or discharge chamber 104. At least a portion of the interior surface of the envelope 102 is provided with a phosphor coating 106 to convert UV light emitted from the discharge chamber into the visible portion of the spectrum.

A gaseous discharge fill or fill gas is contained within the discharge chamber 104. The fill gas typically includes an inert gas such as argon or a mixture of argon and other rare earth gases such as xenon, krypton, and neon at a low pressure often in combination with a small quantity of mercury to provide a desired low vapor pressure for operation of the lamp 100.

The discharge tube in one exemplary embodiment is preferably formed from four U-shaped tubes 108, 110, 112, 114 having generally circular cross sections, although the shapes and number of tubes may be varied without departing from the scope and intent of the present disclosure. The tubes 108, 110, 112, 114 each have generally parallel leg sections 116, 118 and a transverse bridging or light section 120 joining one end of each of the leg sections 116, 118. The opposite end of each of the leg sections 116, 118 is closed.

The tubes 108, 110, 112, 114 are in substantially parallel alignment. The tubes 108, 110, 112, 114 are oriented in the same direction such that the bridging section 120 of the tubes 108, 110, 112, 114 are at one end of the lamp 100 while the closed ends of the section 116, 118 are at the opposite end of the lamp 100. Adjacent leg sections 116 of adjacent tubes are joined by connecting conduits 122 which complete a convoluted and maximize a length of a generally elongate discharge path between cathodes 124 which are provided at the closed ends of two of the exterior leg sections.

The cathodes 124 are preferably of a filament coil type. Each cathode 124 is supported within the envelope 102 by a cathode support structure 126. The cathode support structure 126 includes a pair of electrical lead-in wires 128 connected to opposite ends of the cathodes to supply electrical energy to the cathodes 124 and an electrically insulated support 130 connecting and supporting electrical lead-in wires 128 below the 124. The electrical lead wires 128 extend through a stem 132 which is pinched or sealed to hermetically seal the envelope 102.

A main amalgam member 150 is provided within the sealed envelope 102, preferably located in the exhaust tube 138. Typically, the amalgam is a metal alloy such as an alloy containing a bismuth-indium-mercury (Bi-In-Hg) composition. The main amalgam may also contain tin, zinc, silver, gold and combinations thereof. The particular composition is chosen to be compatible with the operating temperature characteristic of the location in the envelope 102. As such, the alloy is generally ductile at temperatures of about 100°C. The alloy may become liquid at higher lamp operating temperatures. Once the working temperature is reached, the main amalgam 150 holds the correct mercury vapor pressure.

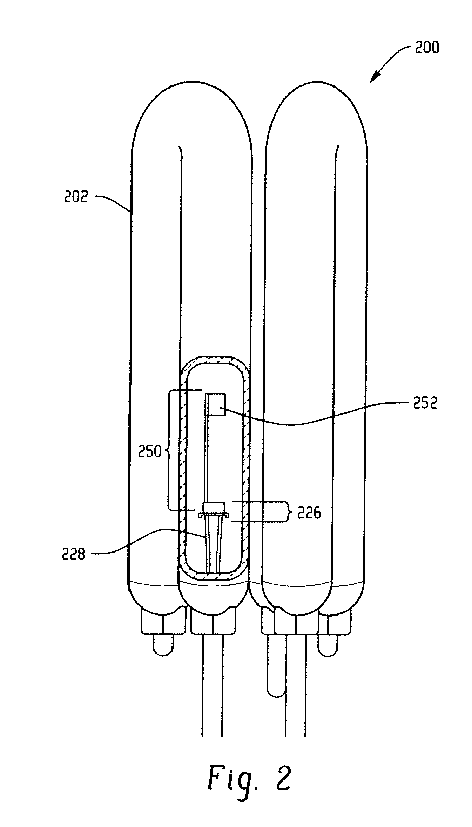

With regard to FIGURE 2, a compact fluorescent lamp 200 is shown. It is to be appreciated that lamp 200 includes many similar features as previously described in connection with lamp 100 so that like reference numerals and components in the "200" series refer to like numerals and components in the "100" series of the FIGURE 1 embodiment. In an exemplary embodiment, an auxiliary amalgam member 250 is provided within the sealed envelope 202 near the cathode 224, and more preferably at a location between the cathodes (i.e., in the arc discharge path). The auxiliary amalgam member 250 is preferably attached to and supported by one of the lead-in wires 228 of the cathode support structure 226 adjacent to the cathode 206. Specifically, the auxiliary amalgam member 250 is a generally planar wire mesh member 252 such as a rectangular or square component. One edge of the generally planar component is mounted to support a spring-like member extending from the lead-in wire 228. The support structure and auxiliary amalgam are shaped like, and generally described as, a "flag-shape" auxiliary amalgam assembly although it will be appreciated that other shapes or configurations could be used. The cathode or filament 224 may be a spiral formed tungsten wire. The wire length sets the resistance and working temperature of the cathode 224, and the shape of the spiral formed tungsten wire aids in holding the emission mix or e-mix.

The auxiliary amalgam member 250 controls the mercury vapor pressure during a starting period of the lamp. The auxiliary amalgam member 250 is heated by being located in the path of the arc discharge because it is disposed between cathodes in the arc discharge path and at an elevated temperature that emits mercury vapor during the starting period to increase the mercury vapor pressure in the discharge lamp and thereby improves warm up characteristics of the lamp 200. The auxiliary amalgam member 250 also absorbs mercury during a non-discharge period, i.e., when the temperature is reduced at the cathode in a non-discharge state. The generally planar wire mesh member 252 can vary in shape and size, while the support member 226 is preferably an elongated, flexible, spring-like component. This is in contrast to the auxiliary amalgam being located between a cathode and the associated mount as is generally done in the prior art.

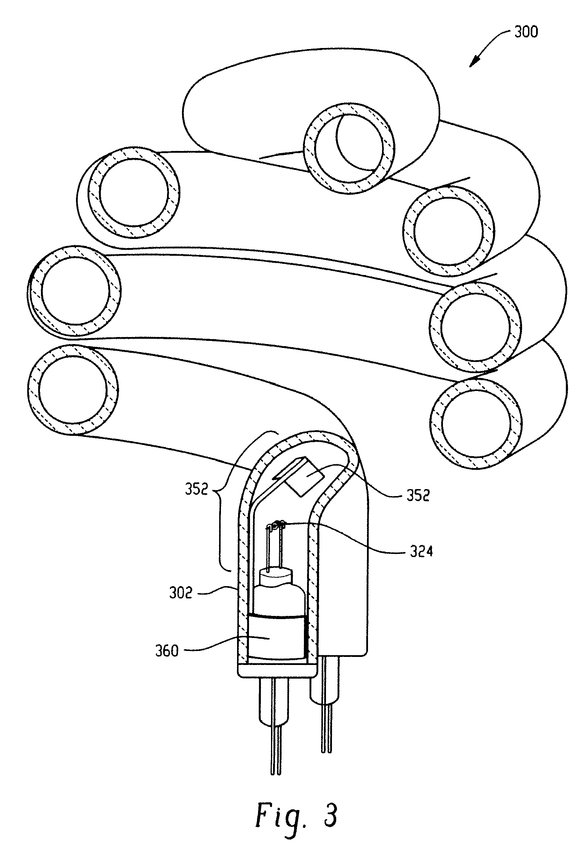

With regard to FIGURE 3, a compact fluorescent lamp 300 is shown. It is to be appreciated that lamp 300 includes many similar features as previously described in connection with lamp 100 so that like reference numerals and components in the "300" series refer to like numerals and components in the "100" series of the FIGURE 1 embodiment. In this exemplary embodiment, an auxiliary amalgam member 350 is received within the sealed envelope 302 and disposed in the discharge path at a location spaced from the cathode 324. As described above with respect to the Figure 2 embodiment, the auxiliary amalgam member 350 is in the form of a flexible, spring-like component also having a generally flag-shape. More particularly, the spring-like auxiliary amalgam component includes a flexible wire 326 secured at one end to a C-shaped attaching component 360 conforming to an inner surface of the discharge tube. The C-shaped, spring-like attaching component 360 is preferably located below the cathode 324 and is preferably in the form of a thin, generally annular band or strip that is interposed between the glass cathode support structure or mount and an inner wall of the discharge tube. A second end of the flexible, spring-like wire member is secured to a wire mesh member 352, preferably having at least one planar portion. As shown in Figure 3, the wire member 352 extends generally axially from the C-shaped attaching component and along a wall surface of the discharge tube. In a region adjacent the cathode, the wire member is bent or curves inwardly away from the wall surface and toward a central portion of the discharge tube. The planar mesh member 352 is thereby located adjacent the cathode and in the arc discharge path defined between the cathodes.

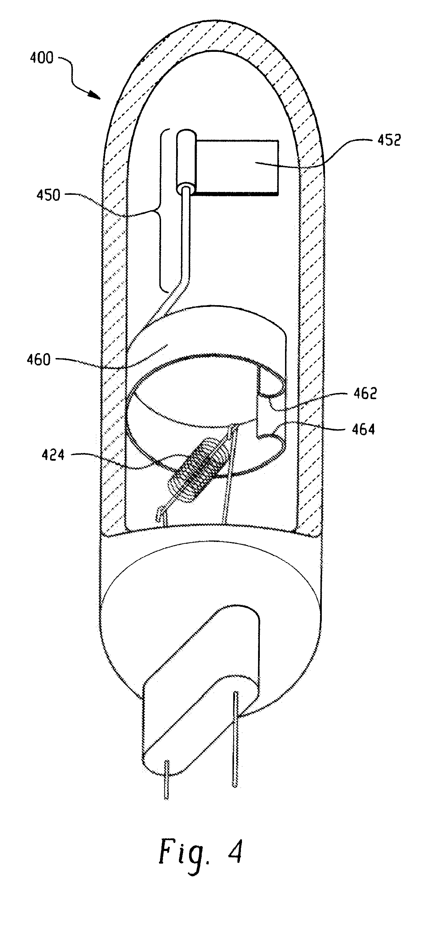

With regard to FIGURE 4, portions of a compact fluorescent lamp 400 are shown. It is to be appreciated that lamp 400 includes many similar features as previously described in connection with lamp 100 so that like reference numerals and components in the "400" series refer to like numerals and components in the "100" series of the FIGURE 1 embodiment. In this exemplary embodiment, an auxiliary amalgam member 450 is received within the sealed envelope 402 in the discharge path and spaced from the cathodes 424 a sufficient distance so as not to be affected by the high temperatures generated by the cathodes 424. As described, the auxiliary amalgam member 450 is in the form of a spring-like component. The auxiliary amalgam member includes a flexible wire 426 secured to a C-shaped attaching component 460 at one end. The C-shaped attaching component conforms to an inner surface of the discharge tube and is preferably located above the cathodes 424. The C-shaped attaching component 460 in the exemplary embodiment is a thin, annular band or strip that has an unflexed/non-compressed diametrical dimension greater than an inner diameter of the discharge tube. The C-shaped attaching component 460 additionally includes turned-in ends 462, 464 that are used to grasp or manipulate the attaching component whereby the diametrical dimension of the attaching component can be reduced by squeezing the ends 462, 464 toward one another. The auxiliary amalgam member 450, and particularly the planar portion 452 (secured in flag-like fashion to one end of the spring-like wire in the illustrated arrangement), is positioned at a desired location in the discharge path. The squeezing force on the ends 462, 464 is removed and the C-shaped attaching component increases in a diametrical dimension. This diametrical expansion of the attaching component grips the inner surface of the discharge tube and securely affixes the auxiliary amalgam member with the arc tube.

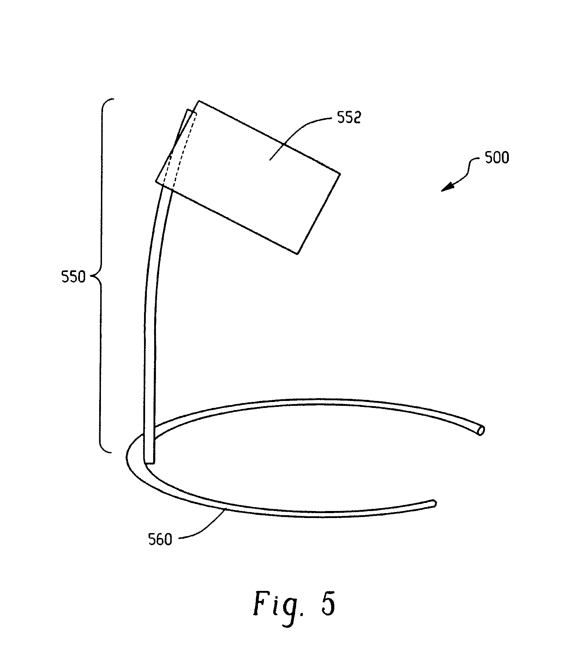

With regard to FIGURE 5, a slightly modified C-shaped, spring-like attaching component 560 is shown. More particularly, the attaching component 560 may be in the form of at least a generally flexible wire member. The flexible wire attaching component is preferably a discontinuous wire (e.g., C-shaped), again, to allow the attaching component to expand or contract. By sizing the attaching wire relative to the inner diameter of the arc tube, the auxiliary amalgam member 550 is held at a desired location in the arc tube - preferably positioning the substantially planar member 552 in the arc discharge wire 526 that in turn is secured to one end of the flexible wire 526 that in turn is secured to the planar member 552 at the other end. The attaching wire 560 and the flexible wire 526 may be formed from the same material, although the wires can be formed of different materials without departing from the scope and intent of the present disclosure. Like the wire portion 352, 452, 552 and the C-shaped, spring-like attaching components 360, 460, 560 are preferably formed from at least a metal from the group of stainless steel, molybdenum, tungsten and combinations thereof.

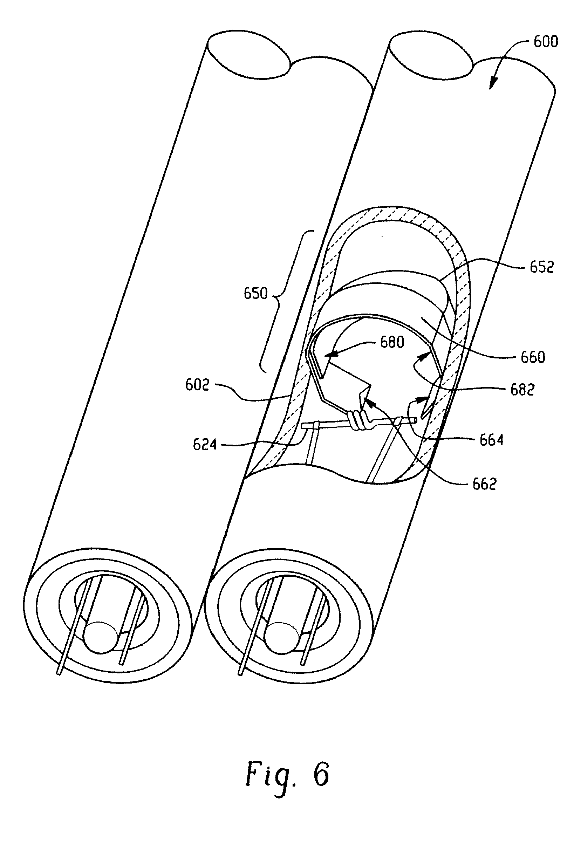

FIGURE 6 illustrates still another compact fluorescent lamp 600. It is to be appreciated that lamp 600 includes many similar features as previously described so that like reference numerals and components in the "600" series are used. In this exemplary embodiment, auxiliary amalgam member 650 is provided within the sealed envelope 602 in the discharge path and spaced from the cathode 624 in the arc discharge path. The auxiliary amalgam member in this embodiment is formed from bands or wide strips of material. In this particular instance, the portion 652 is a generally C-shaped, spring-like member in which ends 680, 682 thereof are secured to a generally C-shaped, spring-like attaching component 660. Preferably, the ends 680, 682 are joined to the attaching component at regions spaced inwardly from first and second ends 662, 664 of the attaching component in a manner that positions the amalgam portion 652 in the arc discharge path.

The disclosure has been described with reference to the preferred embodiments. Clearly, modifications and alterations will occur to others upon reading and understanding the preceding detailed description. It is intended that the disclosure be construed as including all such modifications and alterations.

Various aspects and embodiments of the present invention are defined by the following numbered clauses:
1. A compact fluorescent lamp comprising:
   a discharge tube having cathodes disposed adjacent opposite ends;
   a fill gas including mercury disposed within the discharge tube; and
   an auxiliary amalgam located in the discharge tube and dispersed in the arc to be heated thereby for emitting mercury vapor during at least a starting period.
2. The compact fluorescent lamp of clause 1, further comprising an elongated lead-in wire.
3. The compact fluorescent lamp of any preceding clause, wherein the auxiliary amalgam is a generally planar wire mesh member.
4. The compact fluorescent lamp of any preceding clause, wherein the wire mesh member is a spring-like component.
5. The compact fluorescent lamp of any preceding clause, wherein the spring-like component is attached to the elongated lead-in wire.
6. The compact fluorescent lamp of any preceding clause, wherein the spring-like component is located over the cathode.
7. The compact fluorescent lamp of any preceding clause, wherein the spring-like component is secured to at least an end of a wire, an opposite end of the wire secured to an attaching component conforming to an inner surface of the discharge tube.
8. The compact fluorescent lamp of any preceding clause, wherein the spring-like component is located over the cathode.
9. The compact fluorescent lamp of any preceding clause, wherein the attaching component is preferably C-shaped at least one of a generally planar member and a flexible wire.
10. The compact fluorescent lamp of any preceding clause, wherein the spring-like component having first and second ends in spaced relations, the first and second ends secured to at least a C-shaped attaching component conforming to an inner surface of the discharge tube.
11. The compact fluorescent lamp of any preceding clause, wherein the spring-like component is located above the cathode.
12. A method of positioning an auxiliary amalgam in a compact fluorescent lamp comprising:
   providing a sealed envelope having an interior surface forming a discharge tube;
   disposing a fill gas which includes mercury vapor within the discharge tube;
   providing a continuous arc path with cathodes disposed at each end of the arc path; and
   locating an auxiliary amalgam in the sealed envelope between the cathodes and dispersed in the arc to be heated thereby for emitting mercury vapor during at least a starting period.
13. The method of any preceding clause, further comprising providing an elongated lead-in wire.
14. The method of any preceding clause, further comprising forming the auxiliary amalgam into a generally planar wire mesh member.
15. The method of any preceding clause, further comprising forming the wire mesh member into a spring-like component.
16. The method of any preceding clause of any preceding clause, further comprising attaching the spring-like component to the elongated lead-in wire.
17. The method of any preceding clause, further comprising locating the spring-like component over the cathode.
18. The method of any preceding clause, further comprising securing the spring-like component to at least an end of a wire, securing an opposite end of the wire to at least a C-shaped, spring-like attaching component to an inner surface of the discharge tube.
19. The method of any preceding clause, further comprising locating the spring-like component over the cathode.
20. The method of any preceding clause, further comprising providing the C-shaped, spring-like attaching component to be at least one of a generally planar member and a flexible wire.
21. The method of any preceding clause, further comprising providing the spring-like component to have first and second ends in spaced relations, securing the first and second ends to at least a C-shaped, spring-like attaching component to an inner surface of the discharge tube.
22. The method of any preceding clause, further comprising locating the spring-like component above the cathode.
23. A compact fluorescent lamp comprising;
   a sealed envelope having an interior surface forming a discharge tube;
   a fill gas including mercury vapor disposed within the discharge tube;
   a phosphor coating disposed on the inner surface of the tube;
   a continuous arc path with a cathodes disposed at each end of the arc path;
   and
   an auxiliary amalgam located in the sealed envelope between the cathodes and dispersed in the arc to be heated thereby for emitting mercury vapor during at least a starting period.

24. The compact fluorescent lamp of any preceding clause, further comprising an elongated lead-in wire.

25. The compact fluorescent lamp of any preceding clause, wherein the amalgam is a generally planar wire mesh member. 26. The compact fluorescent lamp of any preceding clause, wherein the wire mesh member is a spring-like component and located over the cathode.

## Claims

1. A compact fluorescent lamp (100) comprising:
a discharge tube (104) having cathodes (224) disposed adjacent opposite ends;
a fill gas disposed within the discharge tube (104); and
an auxiliary amalgam (250) located in the discharge tube (104) and dispersed in the arc to be heated thereby for emitting mercury vapor during at least a starting period.

2. The compact fluorescent lamp (100) of claim 1, further comprising an elongated lead-in wire (128).

3. The compact fluorescent lamp (100) of any preceding claim, wherein the auxiliary amalgam (250) is a generally planar wire mesh member (252).

4. The compact fluorescent lamp (100) of claim 3, wherein the wire mesh member (252) is a spring-like component.

5. The compact fluorescent lamp (100) of claim 4, wherein the spring-like component is attached to the elongated lead-in wire (228).

6. The compact fluorescent lamp (100) of claim 4 or claim 5, wherein the spring-like component is secured to at least an end of a wire, an opposite end of the wire secured to an attaching component (360) conforming to an inner surface of the discharge tube (104).

7. The compact fluorescent lamp (100) of claim 6, wherein the attaching component (360) is preferably C-shaped at least one of a generally planar member and a flexible wire.

8. The compact fluorescent lamp (100) of any of claims 4 to 7, wherein the spring-like component having first and second ends (462, 464) in spaced relations, the first and second ends (462, 464) secured to at least a C-shaped attaching component conforming to an inner surface of the discharge tube (104).

9. The compact fluorescent lamp as in any of claims 4 to 8 in which the spring-like component is located above the cathode (104).

10. A method of positioning an auxiliary amalgam (250) in a compact fluorescent lamp (100) comprising:
providing a sealed envelope (102) having an interior surface forming a discharge tube (104);
disposing a fill gas within the discharge tube (104);
providing a continuous arc path with cathodes (124) disposed at each end of the arc path; and
locating an auxiliary amalgam (250) in the sealed envelope (102) between the cathodes (124) and dispersed in the arc to be heated thereby for emitting mercury vapor during at least a starting period.
